# EUROPÄISCHE PATENTSCHRIFT

(11) **EP 1 033 395 B1**
(45) Veröffentlichungstag und Bekanntmachung des Hinweises auf die Patenterteilung: **11.08.2010**
(21) Anmeldenummer: 99124544.0
(22) Anmeldetag: 09.12.1999
(51) Int. Cl.: C09K 3/18, C03C 17/30

(54) **Zusammensetzung fluororganofunktioneller Silane und/oder Siloxane, Verfahren zu ihrer Herstellung und ihre Verwendung**
Organofluoro functionalised silane and/or siloxane composition, its method of preparation and use
Composition des silanes ou/et siloxanes functionalisés par des groupes organofluoro, leur préparation et utilisation

(30) Priorität: 03.02.1999 DE 19904132
(43) Veröffentlichungstag der Anmeldung: 06.09.2000
(73) Patentinhaber: Evonik Degussa GmbH, 45128 Essen (DE)
(72) Erfinder: Jenkner, Peter, Dr., 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Laven, Ralf, D-60439 Frankfurt (DE); Mack, Helmut, Dr., 79618 Rheinfelden (DE); Monkiewicz, Jaroslaw, Dr., 79618 Rheinfelden (DE); Standke, Burkhard, Dr., 79540 Lörrach (DE); Eckard, Just, 79618 Rheinfelden (DE)

(56) Entgegenhaltungen:
- EP-A- 0 207 282
- EP-A- 0 513 727
- EP-A- 0 748 659
- EP-A- 0 826 748
- EP-A- 0 846 716
- US-A- 5 266 358
- US-A- 5 580 819

## Beschreibung

Die vorliegende Erfindung betrifft eine Zusammensetzung, die mindestens ein fluororganofunktionelles Silan und/oder Siloxan enthält, ein Verfahren zu deren Herstellung und deren Verwendung sowie entsprechend oberflächenmodifizierte Substrate.

Es ist bekannt, durch Mischen oder eine gezielte Säure oder Basen kontrollierte Hydrolyse bzw. Kondensation oder Cokondensation fluororganofunktioneller Chlor- bzw. Alkoxysilane sowie gegebenenfalls weiterer Eduktkomponenten eine Zusammensetzung herzustellen, die mindestens ein fluororganofunktionelles Silan und/oder Siloxan enthält. Zur pH-Wertkontrolle werden hierbei neben organischen oder anorganischen Säuren oder Basen auch saure oder basische Salze, wie Alkalicarbonat, Alkalihydrogensulfat, Alkalidihydrogenphosphat, Magnesiumhydroxid oder Aluminiumacetat, eingesetzt. Ferner ist bekannt, bei der Herstellung der Zusammensetzungen beispielsweise andere hydrolysierbare Organosilane, Silicium-, aber auch Titan- oder Zirkontetrachlorid oder entsprechende Metallsäureester als Eduktkomponenten einzusetzen.

Solche wasser-, lösemittel- oder dispergiermittelhaltigen Zusammensetzungen werden im Allgemeinen für eine hydrophobe und gleichzeitig oleophobe sowie Schmutz abweisende, aber auch beispielsweise hydrophile Ausstattung von Substraten oder zur besonderen Modifizierung der Oberflächeneigenschaften der Substrate eingesetzt, beispielsweise für Metalle, Metalloxide, Füllstoffe, Pigmente, Glas, Emaille, Keramik, Baustoffe, Bauwerke, Fasern, Textilien, Naturstoffe, Kunststoffe, Lacke. Bei dieser Modifizierung kann es sich um die Bildung einer Schutzschicht gegen UV-Strahlung, mechanische, thermische und chemische Einflüsse handeln. Ferner können auch kratzfeste, antikorrosive, antiicing, antifouling, antibakterielle oder antithrombische Eigenschaften erzielt werden. Neben den organofunktionellen Gruppen besitzen besagte Silan- bzw. Siloxan-Systeme in der Regel Si-gebundene Hydroxy- bzw. Alkoxy-Gruppen, die eine spätere Anbindung an das Substrat ermöglichen sollen. Jedoch ist es oft schwierig, eine zufrieden stellende und dauerhafte Anbindung der Beschichtung an das Substrat zu erreichen.

DE 196 46 662 A1 beschreibt die Behandlung einer Metalloberfläche mit einer SnCl₂-Lösung und konsekutiver Aufgabe von aminofunktionellen Alkoxysilanen, wobei feuchteresistente und korrosionsbeständige Beschichtungen erzielt werden.

EP 0 207 282 A2 beschreibt in Beispiel 5 eine Zusammensetzung zur Beschichtung von Oberflächen, welche ein mit einer Fluoralkylsäure modifiziertes Siloxan, Salzsäure und Eisenoctoat in einer Toluollösung enthält.

EP 0 513 727 A2 ist eine Zusammensetzung zur Glasbeschichtung zu entnehmen, welche ein mit Fluor modifiziertes Siloxan, eine Säure und ein Aluminiumsalz enthält.

EP 0 748 659 A2 beschreibt in Beispiel 10 eine Beschichtungszusammensetzung, welche Tridecafluor-1,1,2,2-tetrahydrooctyltrimethoxysilan, Isopropanol, Schwefelsäure und Aluminiumoxid enthält.

US 5,266,358 offenbart eine Zusammensetzung zur Glasbeschichtung, welche Tridecafluor-1,1,2,2-tetrahydrooctyltrimethoxysilan, Salzsäure, ein Alkoxid oder Acetylacetonat von Titan, Aluminium oder Zinn sowie ein organisches Lösemittel enthält.

Stabile hydrophobe Beschichtungen auf Stahl sind durch die Kombination von Alkoxiden, Methylalkoxiden, wie z. B. Al(CH₃)(OC₂H₅)₂, oder Acetonaten der Metalle Al, Zr, Ti, Si, W, Ce, Y oder Sn mit Fluoralkylalkoxysilanen herstellbar, wie beispielsweise in JP 1068477 offenbart. Analog können gemäß JP 4136181 auch Nichtmetalle dauerhaft hydrophobiert werden.

Schließlich offenbart EP 0 799 873 A1 die Herstellung von wasser- und ölabweisenden Belägen durch Auftrag einer Zusammensetzung, die ein wässriges Lösemittel, wie Alkohol, ein fluoriertes Alkoxysilan sowie einen Brönsted-Säure- und/oder Brönsted-Base-Katalysator enthält.

Vergleiche darüber hinaus auch EP 0 846 716 A2, US 5,580,819 sowie EP 0 826 748 A2, welche ebenfalls mit fluorierten Siliciumverbindungen enthaltenden Beschichtungssystemen befasst sind.

Der vorliegenden Erfindung lag somit die Aufgabe zugrunde, eine Zusammensetzung mit verbesserten Haftungs- und Vernetzungseigenschaften auf einer polaren Substratoberfläche und somit besseren Beschichtungseigenschaften bereitzustellen.

Die Aufgabe wird erfindungsgemäß entsprechend den Angaben der Patentansprüche gelöst.

Überraschenderweise wurde gefunden, dass man eine hochreaktive Zusammensetzung erhält, die fluororganofunktionelle Silane und/oder Siloxane, welche neben hydrolysierbaren Gruppen zum Teil Silanol-Gruppen tragen, enthält, wenn man mindestens ein fluororganofunktionelles Chlor- oder Alkoxysilan und gegebenenfalls weitere organofunktionelle, hydrolysierbare Silane, beispielsweise Organochlor- oder Organoalkoxysilane, in Gegenwart einer geringen Menge an Wasser und in Gegenwart mindestens eines Metallsalzes von Zinn(II) oder Titan(III), wobei das Metallsalz ein Chlorid ist, und mindestens einer Mineralsäure, geeigneterweise in einem organischen Löse- oder Dispergiermittel, beispielsweise in einem Alkohol, mischt, gegebenenfalls partiell hydrolysiert sowie gegebenenfalls kondensiert bzw. oligomerisiert.

Durch Aufbringen der vorliegenden Zusammensetzung auf ein Substrat kann in überraschender und vorteilhafter Weise eine besonders gut haftende und dauerhafte Beschichtung erzielt werden. In der Regel liegen die reaktiven Si-Verbindungen in der Zusammensetzung als reaktive monomere Einheiten vor. Erfindungsgemäße Zusammensetzungen können jedoch auch so eingestellt werden, dass vorwiegend oligomere Si-Verbindungen vorliegen.

Darüber hinaus sind erfindungsgemäße Zusammensetzungen trotz ihrer hohen Reaktivität in überraschender Weise längere Zeit stabil, in der Regel länger als 5 Monate. Ferner ist die erfindungsgemäße Zusammensetzung gleich gebrauchsfertig und vergleichsweise einfach anzuwenden, z. B. durch Tauchen, Sprühen oder Aufpolieren, denn die erfindungsgemäß erhaltene Zusammensetzung zeichnet sich durch eine besonders rasche und vollständige Reaktion mit einer polaren Oberfläche aus. Im Allgemeinen entsteht bei der Anwendung der erfindungsgemäßen Zusammensetzung zugleich eine homogene, hochvernetzte Beschichtung, die sich in Abhängigkeit zur Funktionalität der organischen Gruppen in hervorragender Weise zur vollständigen und dauerhaften chemisch gebundenen organischen Modifizierung von polaren Substratoberflächen eignet. Dabei wirken die besagten Metallsalze in Verbindung mit den besagten Mineralsäuren als Katalysator.

Gegenstand der vorliegenden Erfindung ist daher eine Zusammensetzung, die mindestens ein fluororganofunktionelles Silan, mindestens eine Mineralsäure und mindestens ein Metallsalz von Zinn(II) oder Titan(III) und gegebenenfalls mindestens ein Siloxan enthält, wobei das Metallsalz ein Chlorid ist.

Vorzugsweise liegt der Gehalt an Metallsalz in der erfindungsgemäßen Zusammensetzung bei 0,01 bis 10 Gew.-%, besonders vorzugsweise bei 0,01 bis 1 Gew.-%, bezogen auf die Zusammensetzung.

Ferner enthält die erfindungsgemäße Zusammensetzung als Mineralsäure vorzugsweise Chlorwasserstoff, wobei der Gehalt an Mineralsäure bevorzugt bei 0,001 bis 5 Gew.-%, besonders vorzugsweise bei 0,01 bis 1 Gew.-%, ganz besonders vorzugsweise bei 0,05 bis 0,5 Gew.-%, bezogen auf die Zusammensetzung, beträgt.

Geeigneterweise enthält die erfindungsgemäße Zusammensetzung ein Löse- bzw. Dispergiermittel. Beispielsweise kann sie einen Gehalt an einem aromatischen Kohlenwasserstoff oder einem aliphatischen Kohlenwasserstoff oder einem Alkohol oder Wasser oder einer Mischung daraus aufweisen. Insbesondere können Methanol, Ethanol, n-Propanol, i-Propanol, n-Butanol, Aceton, Cyclohexan, n-Hexan oder Toluol vorteilhaft als Lösemittel eingesetzt werden. In der Regel ergänzt der Gehalt an Löse- und/oder Dispergiermittel die Summe der Anteile der erfindungsgemäßen Zusammensetzung - Organosilane bzw. Organosiloxane, Mineralsäure, Metallsalz sowie gegebenenfalls Wasser - auf 100 %.

Erfindungsgemäße Zusammensetzungen enthalten vorzugsweise solche Silane und/oder Siloxane, die fluororganofunktionelle Gruppen, hier insbesondere fluoralkylfunktionelle Gruppen der Formel CF₃(CF₂)ₘ(CH₂)ₙ- mit m = 0 bis 18 und n = 0 oder 2, beispielsweise Tridecylfluoroctyl- [(C₆F₁₃)-(CH₂)₂-], Heptadecafluordecyl- [(C₈F₁₇)(CH₂)₂-], Nonafluorhexyl- [(C₄F₉)-(CH₂)₂-], Heneicosafluordecyl- [(C₁₀F₂₁)-(CH₂)₂-], 3,3,3-Trifluorpropyl- [(CF₃)-(CH₂)₂-] oder 3-(1,1,2,2-Tetrafluorethoxy)propyl- [(HC₂F₄)-O-(CH₂)₃-], gegebenenfalls Aminoalkyl-Gruppen, beispielsweise 3-Aminopropyl-, N-2-Aminoethyl-3-aminopropyl- oder N-2-Aminoethyl-N'-2-aminoethyl-3-aminopropyl-, sowie Vinyl-Gruppen, Methacryloxyalkyl-Gruppen, beispielsweise 3-Methacryloxypropyl-, sowie Alkyl-Gruppen, beispielsweise Methyl-, Propyl-, i-Propyl-, n-Butyl-, i-Butyl-, t-Butyl-, n-Pentyl-, n-Hexyl-, n-Octyl-, i-Octyl-, Hexadecyl-, oder Cycloalkyl-Gruppen, beispielsweise Cyclopentyl- oder Cyclohexyl-, oder Cycloalkylen-Gruppen, beispielsweise Cyclohexenyl-, Cyclooctenyl- oder Cyclododecadienyl-Gruppen, weiterhin Epoxyalkyl- und Epoxycycloalkyl-Gruppen, wie 3-Glycidyloxypropyl- oder 2,3-Epoxycyclohexyl-Gruppen, enthalten, wobei im Siloxan maximal eine der genannten organofunktionellen Gruppen an einem Silicium gebunden ist, dessen übrige Valenzen durch -O-Si-Bindungen oder OH-Gruppen, gegebenenfalls durch Alkoxy-Gruppen oder Chlor-Substituenten belegt werden.

Gegenstand der vorliegenden Erfindung ist ferner ein Verfahren zur Herstellung einer erfindungsgemäßen Zusammensetzung durch Mischen, gegebenenfalls partielle Hydrolyse und gegebenenfalls Kondensation mindestens eines fluororganofunktionellen Silans und gegebenenfalls weiterer organofunktioneller Silane in Gegenwart von Wasser, mindestens einer Mineralsäure und mindestens eines Metallsalzes von Zinn(II) oder Titan(III), wobei das Metallsalz ein Chlorid ist.

Geeigneterweise ist die Wassermenge, die beim erfindungsgemäßen Verfahren zugegen ist, gering. Dabei beträgt die Menge an Wasser vorzugsweise 1 Gew.-ppm bis 2 Gew.-%, besonders vorzugsweise 10 Gew.-ppm bis 1,5 Gew.-%, ganz besonders vorzugsweise 0.01 bis 1 Gew.-%, insbesondere bevorzugt 0,05 bis 0,3 Gew.-%, wobei die Angaben der Wassermenge auf die Menge der eingesetzten Silane bezogen sind und auch Kristallwassermengen einschließen.

Beim erfindungsgemäßen Verfahren legt man geeigneterweise die zu mischenden bzw. zu hydrolysierenden und gegebenenfalls zu kondensierenden Silane als Gemisch vor und gibt die Komponenten Metallsalz, Mineralsäure und gegebenenfalls Wasser gleichzeitig oder zeitlich versetzt zu.

Geeigneterweise führt man das Mischen, die Hydrolyse oder Kondensation der eingesetzten Silane in einem Löse- oder Dispergiermittel durch. Insbesondere kann man hierfür einen aromatischen Kohlenwasserstoff, wie Toluol, oder einen aliphatischen Kohlenwasserstoff, wie Cyclohexan, oder einen Alkohol, wie Methanol oder Ethanol oder Isopropanol, oder eine Mischung daraus einsetzen. In der Regel erhält man dabei klare, stabile Lösungen oder metastabile Dispersionen, die üblicherweise länger als 5 Monate lagerstabil sind.

Bevorzugt setzt man beim erfindungsgemäßen Verfahren folgende Silane ein:
- fluororganofunktionelle Silane der allgemeinen Formel I

   F₃C(CF₂)ₘ(CH₂)ₙSiR¹_{y}X_{(3-y)} I,

   worin X ein Chlor oder eine RO-Gruppe ist und R einen linearen oder verzweigten Alkylrest mit 1 bis 4 C-Atomen darstellt, R¹ eine lineare, verzweigte oder cyclische Alkylgruppe mit 1 bis 8 C-Atomen bedeutet, y = 0,1 oder 2, n = 0 oder 2 und m = 0 bis 18 sind, wie 3,3,4,4,5,5,6,6,7,7,8,8,8-Tridecafluoroctyltrimethoxysilan, 3,3,4,4,5,5,-6,6,7,7,8,8,8-Tridecafluoroctyltrichlorsilan, 3,3,4,4,5,5,6,6,7,7,8,8,8-Tridecafluoroctyltriethoxysilan, 3,3,4,4,5,5,6,6,7,7,8,8,9,9,10,10,10-Heptadecafluordecyltriethoxysilan, 3,3,4,4,5,5,6,6,7,7,8,8,9,9,10,10,10-Heptadecafluordecyltrichlorsilan, 3,3,4,4,5,5,6,6,7,7,8,8,9,9,10,10,10-Heptadecafluordecyltrimethoxysilan, 3,3,4,4,5,5,6,6,6-Nonafluorhexyltriethoxysilan, 3,3,4,4,5,5,6,6,6-Nonafluorhexyltrimethoxysilan, 3,3,4,4,5,5,-6,6,6-Nonafluorhexyltrichlorsilan, 3,3,4,4,5,5,6,6,7,7,8,8,9,9,10,10, 11,11,12,12,12-Heneicosafluordodecyltriethoxysilan, 3,3,3-Trifluorpropyltrichlorsilan, 3,3,3-Trifluorpropyltrimethoxysilan, 3,3,3-Trifluorpropyltriethoxysilan oder 3-(1,1,2,2-Tetrafluorethoxy)propyltrimethoxysilan oder 3-(1,1,2,2-Tetrafluorethoxy)propyltrichlorsilan und gegebenenfalls
- weitere Silane, beispielsweise:
   aminofunktionelle Organosilane, wie 3-Aminopropyltriethoxysilan, 3-Aminopropyltrimethoxysilan, 2-Aminoethyl-3-aminopropyltrimethoxysilan, N-2-Aminoethyl-N'-2-aminoethyl-3-aminopropyltrimethoxysilan, Bis(3-triethoxysilylpropyl)amin, Bis(3-trimethoxysilylpropyl)amin,
   epoxyfunktionelle Organosilane, wie 3-Glycidyloxypropyltrimethoxysilan, 3-Glycidyloxypropyltriethoxysilan, 2-(2,3-Epoxycyclohexyl)ethyltrimethoxysilan,
   Alkylsilane, wie Methyltrichlorsilan, Methyltrimethoxysilan, Methyltriethoxysilan, n-Propyltriethoxysilan, i-Propyltrimethoxysilan, Octyltrichlorsilan, Octyltriethoxysilan, i-Octyltrimethoxysilan, Hexadecyltrimethoxysilan, Octadecyltrichlorsilan,
   Cycloalkylsilane, wie Cyclohexyltrimethoxysilan, Cyclopentyltrichlorsilan, Cyclohexyltriethoxysilan,
   Cycloalkenylsilane, wie Cyclohexenylethyltriethoxysilan, Cyclododecadienyltrichlorsilan, Cyclooctenyltrimethoxysilan,
   sowie Tetraethoxysilan sowie Vinyltrimethoxysilan, Vinyltriethoxysilan, Vinyltris(methoxyethoxy)silan oder 3-Methacryloxypropyltrimethoxysilan sowie 3-Methacryloxypropyltriethoxysilan, um nur einige zu nennen.

Weiterhin kann man die jeweiligen Silane in verschiedenen Mischungsverhältnissen miteinander sowie mit gleichen oder mehreren verschiedenen Funktionalitäten einsetzen. Vorzugsweise stellt man den Gehalt an fluororganofunktionellen Silanen und/oder fluororganofunktionellen Siloxanen in der erfindungsgemäßen Zusammensetzung auf 0,01 bis 10 Gew.-%, besonders vorzugsweise auf 0,1 bis 5 Gew.-%, ganz besonders vorzugsweise auf 0,25 bis 3 Gew.-%, bezogen auf die Zusammensetzung, ein.

Ferner setzt man beim erfindungsgemäßen Verfahren das Metallsalz bevorzugt in fester oder flüssiger oder gelöster Form ein. Geeigneterweise setzt man als Metallsalz ein Chlorid ein. Als Metallsalz besonders bevorzugt sind Metallchloride - insbesondere Zinn(II)chlorid sowie Titan(III)chlorid. Geeigneterweise setzt man das Metallsalz in einer Menge von 0,01 bis 10 Gew.-%, bezogen auf die fertige Zusammensetzung, ein. Als Mineralsäure setzt man beim erfindungsgemäßen Verfahren bevorzugt Chlorwasserstoff ein, wobei die Menge, bezogen auf die Molmasse der Mineralsäure und auf die spätere Zusammensetzung, geeigneterweise 0,001 bis 5 Gew.-% beträgt. Man kann die Mineralsäure in konzentrierter oder wässriger Form einsetzen.

Im Allgemeinen führt man das erfindungsgemäße Verfahren wie folgt durch:

In der Regel legt man das Silan vor. Ferner kann man das Löse- bzw. Dispergiermittel zugeben. Nachfolgend gibt man geeigneterweise unter guter Durchmischung die Komponenten Metallsalz, Mineralsäure und gegebenenfalls Wasser zu. Man kann die Komponenten aber auch zu einem unverdünnten oder partiell hydrolysierten Silan oder Silanegemisch entweder gleichzeitig oder hintereinander geben. Das Mischen, Umsetzen bzw. Reifen erfolgt im Allgemeinen unter Schutzgasabdeckung bei einer Temperatur von 10 bis 40 °C über ½ bis 72 Stunden, vorzugsweise bei Raumtemperatur (15 bis 25°C) über eine Zeitdauer von 1 bis 24 Stunden, besonders vorzugsweise über 5 bis 12 Stunden. Geeigneterweise kann das Reifen der Mischung unter Rühren erfolgen. Die Herstellung kann aber auch bei einer Temperatur bis 50 °C, gegebenenfalls unter Verwendung eines Rührers sowie eines Kühlers, über einen Zeitraum von ¼ bis 24 Stunden durchgeführt werden. Die erhaltene Zusammensetzung kann durch Zugabe eines Löse- oder Dispergiermittels verdünnt werden.

Üblicherweise verbleibt das eingesetzte Metallsalz in der erfindungsgemäßen Zusammensetzung, wodurch der vorliegende Katalysator bei der Verwendung der erfindungsgemäßen Zusammensetzung insbesondere die Anbindung und Kondensation des Silans bzw. Siloxans an die Substratoberfläche in überraschend guter und somit vorteilhafter Weise unterstützt.

Die Aufbringung der in beschriebener Weise erhaltenen erfindungsgemäßen Zusammensetzung auf Substrate bzw. Werkstücke kann durch Tauchen, Polieren, Sprühen oder Anstreichen erfolgen, wobei die Dicke der Beschichtung bevorzugt zwischen 0,1 nm und 1 000 µm, besonders vorzugsweise zwischen 0,5 und 50 nm, ganz besonders vorzugsweise zwischen 1 und 15 nm, liegt. Die Behandlungszeit liegt im Allgemeinen bei wenigen Sekunden bis zu ca. 1 Stunde, bevorzugt bei ca. 1 bis 20 Minuten, wobei die Dauer in einigen Fällen für die Homogenität der Beschichtung, in der Regel jedoch nicht für deren Dicke ausschlaggebend ist. An die Behandlung kann eine Trocknungszeit von 10 Sekunden bis 3 Stunden bei Temperaturen von 20 bis 200°C angeschlossen werden. Üblicherweise erfolgt die Trocknung bei 80 bis 150 °C über eine Zeit von 5 bis 20 Minuten. Der Trocknungsvorgang kann an der Luft, im Vakuum oder unter einem Schutzgas, wie Argon oder Stickstoff, erfolgen. Als bevorzugte Substrate seien beispielsweise Holz, Naturfasern, Metalle, Metalloxide, Glas, Keramik, Emaille, Kunststoffe, Stein, Kunststein, Marmor, Beton oder Bitumen erwähnt.

Gegenstand der vorliegenden Erfindung ist daher auch die Verwendung einer erfindungsgemäßen Zusammensetzung für die Beschichtung von Oberflächen, vorzugsweise von polaren Oberflächen. Solche polaren Substrate sind beispielsweise Gläser, wie Quarzglas oder Borosilikatglas, Metalle, wie Stahl, Kupfer, Silber, Aluminium, oder Legierungen, wie Messing, Porzellane, Klinker, Emaille, Mineralien, aber auch Naturstoffe, wie Seide, Sisal oder Hanf.

Auch Kunststoffoberflächen mit polaren Funktionalitäten, wie beispielsweise bei Polyamid, Polycarbonat, Phenol-, Furan- und Epoxidharzen, Polystyrol oder Polyestern, können ebenfalls dauerhaft modifiziert werden. Durch den erzielbaren hohen Vernetzungsgrad ist weiterhin auch die stabile Beschichtung von weitgehend unpolaren Substratoberflächen, wie z. B. bei Polypropylen, Polyethylen oder Polymethylmethacrylat, möglich.

Ferner sind Gegenstand der vorliegenden Erfindung oberflächenmodifizierte Substrate, die durch Beschichten mit der erfindungsgemäßen

Zusammensetzung erhältlich sind. Solche oberflächenmodifizierten Substrate weisen bevorzugt eine Beschichtung mit einer Dicke von 0,1 nm bis 1 000 µm, besonders vorzugsweise mit einer Dicke von 0,1 bis 500 nm, auf.

Erfindungsgemäß erhaltene, oberflächenmodifizierte Substrate zeichnen sich in hervorragender Weise auch durch eine ausgezeichnete Wasser-, Feuchte-, Wärme-, Säure- und Laugebeständigkeit sowie durch ihre UV-Stabilität aus. Die Haftung der Beschichtung auf dem Substrat ist in der Regel, sofern die Ausbildung chemischer Bindungen zur Oberfläche grundsätzlich möglich sind, hervorragend, ferner dauerhaft bei ebenfalls hervorragender mechanischer Beständigkeit und gleichzeitiger Flexibilität und Elastizität.

Die vorliegende Erfindung wird durch die nachfolgenden Beispiele näher erläutert:

### Beispiel A

### Herstellung von Alkylsilan-basierenden Zusammensetzungen:

### Nr. 1 (Vergleichsbeispiel):

5,0 g DYNASYLAN^{®} OCTEO (Octyltriethoxysilan), 5,0 g essigsaures H₂O (pH = 2,5; 19,3 g destilliertes Wasser) werden mit 0,7 g 100%iger Essigsäure vermischt sowie 490,0 g Ethanol bei Raumtemperatur über 5 Stunden in einer Glasflasche gerührt. Die Zusammensetzung entspricht 1,0 Gew.-% DYNASYLAN^{®} OCTEO, 1,0 Gew.-% H₂O (pH = 2,5) und 98,0 Gew.-% Ethanol.

### Nr. 2 (Vergleichsbeispiel):

5,0 g DYNASYLAN^{®} OCTEO (Octyltriethoxysilan), 1,0 g Salzsäure (37 Gew.-% HCl / 63 Gew.-% H₂O), 493,5 g Ethanol und 0,5 g SnCl₂x2H₂O werden bei Raumtemperatur 5 Stunden lang in einer Glasflasche gerührt. Die Zusammensetzung entspricht 1,0 Gew.-% DYNASYLAN^{®} OCTEO, 0,126 Gew.-% H₂O, 0,074 Gew.-% HCl (absolut), 0,1 Gew.-% SnCl₂x2H₂O und 98,7 Gew.-% Ethanol.

### Nr. 3 (Vergleichsbeispiel):

5,0 g DYNASYLAN^{®} OCTEO (Octyltriethoxysilan), 1,0 g Salzsäure, 493,5 g Isopropanol und 0,5 g SnCl₂x2H₂O werden bei Raumtemperatur 5 Stunden lang in einer Glasflasche gerührt (Reifezeit). Die Zusammensetzung entspricht 1,0 Gew.-% DYNASYLAN^{®} OCTEO, 0,126 Gew.-% H₂O, 0,074 Gew.-% HCI (absolut), 0,1 Gew.-% SnCl₂x2H₂O und 98,7 % Isopropanol.

### Behandlung von Fensterglasplatten:

### Beschichtungsvorgang:

Die Formulierungen werden direkt nach der Reifezeit eingesetzt. Die Glasplatten werden nach Vorreinigung mit Isopropanol mit den Formulierungen 1 und 2 durch einen 20-minütigen Tauchvorgang behandelt.
Die Platte mit der Formulierung 3 wird durch 2-minütiges Einpolieren zweiseitig beschichtet. Nach dem Ablaufen der überschüssigen Lösung (ca. 1 min) erfolgt eine Nachbehandlung über 1 h bei 150 °C im Trockenschrank.

### Überprüfung der Wasserbeständigkeit:

Die beschichteten Glasplatten werden über 5 h in destilliertem Wasser gekocht.
Die hydro-/oleophoben Eigenschaften werden durch Messung des statischen Randwinkels überprüft (DIN EN 828, "Benetzbarkeit: Bestimmung durch Messung des Kontaktwinkels und der kritischen Oberflächenspannung fester Oberflächen"). Die Randwinkel werden mehrmals an verschiedenen Punkten auf beiden Oberfächen (Luft-/Zinnseite) bestimmt, vgl. Tabelle 1.

**Tabelle 1**

| | | |
|---|---|---|
| Vergleichende Zusammenstellung der Beschichtungsversuche zu den Beispielen A1 bis A3 | | |

| Fensterglasplatte (Zusammensetzung Nr.) [Anwendung] | Mittlerer statischer Randwinkel (H₂O) vor Kochtest [°] | Mittlerer statischer Randwinkel (H₂O) nach 5 h Kochtest [°] |
|---|---|---|
| (Nr. 1) [getaucht] | 75 bis 81 ⇒ **78** | 60 bis 66 ⇒ **63** |
| (Nr. 2) [getaucht] | 96 bis 106 ⇒ **101** | 68 bis 66 ⇒ **67** |
| (Nr. 3) [einpoliert] | 94 bis 97 ⇒ **96** | 65 bis 72 ⇒ **69** |

### Beispiel B

### Herstellung einer Fluoralkylsilan-basierenden Zusammensetzung:

### Nr. 4:

5,0 g DYNASYLAN^{®} F 8261 (3,3,4,4,5,5,6,6,7,7,8,8,8-Tridecafluoroctyltriethoxysilan), 1,0 g Salzsäure (37 % HCI / 63 % H₂O), 5 g Wasser, 488,4 g Ethanol und 0,6 g SnCl₂x2H₂O werden bei Raumtemperatur 5 h lang in einer Glasflasche gerührt (Reifezeit). Die Zusammensetzung entspricht 1,0 Gew.-% DYNASYLAN^{®} F 8261, 1,126 Gew.-% H₂O, 0,074 Gew.-% HCI (absolut), 0,12 Gew.-% SnCl₂x2H₂O und 97,68 Gew.-% Ethanol.

### Behandlung von unbehandelten Polystyrolplatten, Polyester-Harz, glasiertem Porzellan und emaillierten Blechen:

### Beschichtungsvorgang:

Die Lösung wird nach einer Standzeit von 24 h eingesetzt. Die Substrate werden mit Isopropanol gereinigt und die Formulierung mit einem Papiertuch aufgetragen (Polystyrol) bzw. für 5 min getaucht (Blech). Danach erfolgt bei Polystyrol eine Nachbehandlung bei 80 °C über 1 h im Trockenschrank, die emaillierten Bleche werden bei 50 °C 1 h getrocknet.

### Überprüfung der Wasserbeständigkeit:

Die beschichteten Platten werden über 5 h in destilliertem Wasser gekocht. Die hydro-/oleophoben Eigenschaften werden durch Messung des statischen Randwinkels überprüft. Die Randwinkel werden mehrmals an verschiedenen Punkten auf beiden Oberfächen bestimmt, vgl. Tabelle 2.

**Tabelle 2**

| Vergleichende Zusammenstellung der Beschichtungsversuche zu dem Beispiel B4 | | |
|---|---|---|
| Substrat (Zusammensetzung Nr.) | Mittlerer statischer Randwinkel (H₂O) vor Kochtest [°] | Mittlerer statischer Randwinkel (H₂O) nach 5 h Kochtest [°] |
| Polystyrol, unbehandelt | 61 | < 60 |
| Polystyrol (Nr. 4) | 94 | 98 |
| Polyester, unbehandelt | 98 | --- |
| Polyester (Nr.4) | 98 | 97 |
| Porzellan, unbehandelt | 41 | --- |
| Porzellan (Nr. 4) | 92 | 105 |
| Emaille, unbehandelt | 12 | < 12 |
| Emaille (Nr. 4) | 95 | 93 |

### Beispiel C

### Herstellung einer Fluoralkylsilan-basierenden Zusammensetzung:

### Nr. 5a:

5,0 g DYNASYLAN^{®} F 8261 (3,3,4,4,5,5,6,6,7,7,8,8,8-Tridecafluoroctyltriethoxysilan), 1,0 g Salzsäure (37 Gew.-% HCI / 63 Gew.-% H₂O), 493,5 g Isopropanol und 0,5 g SnCl₂x2H₂O werden bei Raumtemperatur 3 h lang in einer Glasflasche gerührt (Reifezeit). Die Zusammensetzung entspricht 1,0 Gew.-% DYNASYLAN^{®} F 8261, 0,126 Gew.-% H₂O, 0,074 Gew.-% HCI (absolut), 0,1 Gew.-% SnCl₂x2H₂O und 98,7 Gew.-% Isopropanol.

### Nr. 5b (Vergleichsbeispiel):

Als nicht Metallsalz- und Mineralsäure-haltiger Standard wird DYNASYLAN^{®} F 8261, 1%ig in Isopropanol, mit 1 Gew.-% H₂O vorhydrolysiert (pH 2,5; essigsauer) und zum Vergleich eingesetzt.

### Behandlung von Fensterglas- und Polyacrylglasplatten:

### Beschichtungsvorgang:

Die Lösung wird nach einer Standzeit von 72 h eingesetzt. Die Substrate werden mit Isopropanol gereinigt und die Formulierung je 1 min mit einem Papiertuch aufgetragen. Die beschichteten Muster werden bei Raumtemperatur 1 Tag gelagert; es erfolgt keine Nachbehandlung.

### Überprüfung der Wasserbeständigkeit:

Die beschichteten Platten werden über 5 h in dest. H₂O gekocht.
Die hydro-/oleophoben Eigenschaften werden durch Messung des statischen Randwinkels überprüft. Die Randwinkel werden mehrmals an verschiedenen Punkten auf beiden Oberfächen bestimmt, vgl. Tabelle 3.

**Tabelle 3**

| Vergleichende Zusammenstellung der Beschichtungsversuche zu den Beispielen C5 | | |
|---|---|---|
| Substrat (Zusammensetzung Nr.) | Mittlerer statischer Randwinkel (H₂O) vor Kochtest [°] | Mittlerer statischer Randwinkel (H₂O) nach 5 h Kochtest [°] |
| Fensterglas, unbehandelt | 17 | 17 |
| Fensterglas (Nr. 5a) | 98 bis 103 ⇒ 101 | 81 bis 95 ⇒ 88 |
| Fensterglas (Nr. 5b) | 85 | 44 |
| Polyacrylat, unbehandelt | 75 | 72 |
| Polyacrylat (Nr. 5a) | 94 | 85 |

### Beispiel D

### Herstellung einer Fluoralkylsilan-basierenden Zusammensetzung:

### Nr. 6 (Vergleichsbeispiel):

2,5 g DYNASYLAN^{®} F 8261 (3,3,4,4,5,5,6,6,7,7,8,8,8-Tridecafluoroctyltriethoxysilan), 244,7 g Ethanol und 0,3 g SnCl₂x2H₂O werden bei Raumtemperatur 1 h lang in einer Glasflasche gerührt. Die Zusammensetzung entspricht 1,0 Gew.-% DYNASYLAN^{®} F 8261, 0,12 Gew.-% SnCl₂x2H₂O und 98,88 Gew.-% Ethanol.

### Nr.7:

2,5 g DYNASYLAN^{®} F 8261 (3,3,4,4,5,5,6,6,7,7,8,8,8-Tridecafluoroctyltriethoxysilan), 2,5 g H₂O, 0,5 g Salzsäure (37 Gew.-% HCl / 63 Gew.-% H₂O), 244,2 g Ethanol und 0,3 g SnCl₂x2H₂O werden bei Raumtemperatur 1 h lang in einer Glasflasche gerührt. Die Zusammensetzung entspricht 1,0 Gew.-% DYNASYLAN^{®} F 8261, 1,126 Gew.-% H₂O, 0,074 Gew.-% HCI (absolut), 0,12 Gew.-% SnCl₂x2H₂O und 97,68 Gew.-% Ethanol.

### Nr.8 (Vergleichsbeispiel):

2,5 g DYNASYLAN^{®} F 8261 (3,3,4,4,5,5,6,6,7,7,8,8,8-Tridecafluoroctyltriethoxysilan), 2,5 g H₂O, 0,5 g Salzsäure (37 Gew.-% HCl / 63 Gew.-% H₂O) und 244,5 g Ethanol werden bei Raumtemperatur 1 h lang in einer Glasflasche gerührt (Reifezeit). Die Zusammensetzung entspricht 1,0 Gew.-% DYNASYLAN^{®} F 8261, 1,0 Gew.-% H₂O, 0,2 Gew.-% HCI (absolut) und 97,80 Gew.-% Ethanol.

### Nr. 9:

2,5 g DYNASYLAN^{®} F 8261 (3,3,4,4,5,5,6,6,7,7,8,8,8-Tridecafluoroctyltriethoxysilan), 2,5 g H₂O, 0,5 g Salzsäure (37 Gew.-% HCl / 63 Gew.-% H₂O), 244,2 g Ethanol und 0,3 g AlCl₃x6H₂O werden bei Raumtemperatur 5 h lang in einer Glasflasche gerührt (Reifezeit). Die Zusammensetzung entspricht 1,0 Gew.-% DYNASYLAN^{®} F 8261, 0,126 Gew.-% H₂O, 0,074 Gew.-% HCI (absolut), 0,12 Gew.-% AlCl₃x6H₂O und 97,68 Gew.-% Ethanol.

### Nr.10:

2,5 g DYNASYLAN^{®} F 8261 (3,3,4,4,5,5,6,6,7,7,8,8,8-Tridecafluoroctyltriethoxysilan), 2,5 g H₂O, 0,5 g Salzsäure (37 Gew.-% HCl / 63 Gew.-% H₂O), 244,2 g Ethanol und 0,3 g FeCl₃x6H₂O werden bei Raumtemperatur 1 h lang in einer Glasflasche gerührt (Reifezeit). Die Zusammensetzung entspricht 1,0 Gew.-% DYNASYLAN^{®} F 8261, 0,126 Gew.-% H₂O, 0,074 Gew.-% HCI (absolut), 0,12 Gew.-% FeCl₃x6H₂O und 97,68 Gew.-% Ethanol.

### Behandlung von Fensterglasplatten:

### Beschichtungsvorgang:

Die Lösungen werden nach verschiedenen Reifezeiten eingesetzt (siehe Tabelle 4). Die Platten werden mit Isopropanol gereinigt und für 5 min in die Formulierung getaucht. Alternativ wird die Formulierung mit Papiertüchern einpoliert. Nach Abtropfen der überschüssigen Lösung werden die beschichteten Muster bei 150 °C über 1 h nachbehandelt.

### Überprüfung der Wasserbeständigkeit:

Die beschichteten Platten werden über 5 Stunden in dest. H₂O gekocht.
Die hydro-/oleophoben Eigenschaften werden durch Messung des statischen Randwinkels überprüft. Die Randwinkel werden mehrmals an verschiedenen Punkten auf beiden Oberfächen bestimmt, vgl. Tabelle 4.

**Tabelle 4**

| Vergleichende Zusammenstellung der Beschichtungsversuche zu den Beispielen D6 bis D10 | | |
|---|---|---|
| Zusammensetzung Nr. (Reifezeit) [Anwendung] | Mittlerer statischer Randwinkel (H₂O) vor Kochtest [°] | Mittlerer statischer Randwinkel (H₂O) nach 5 h Kochtest [°] |
| Nr. 6 (1 h) [getaucht] | 62 | 31 |
| Nr. 6 (1 h) [poliert] | 77 | 45 |
| Nr. 7 (1 h) [getaucht] | 94 | 57 |
| Nr. 7 (1 h) [poliert] | 94 | 66 |
| Nr. 7 (5h) [getaucht] | 92 | 78 |
| Nr. 7 (72 h) [getaucht] | 96 | 89 |
| Nr. 8 (1 h) [getaucht] | 76 | 66 |
| Nr. 8 (24 h) [getaucht] | 92 | 73 |
| Nr. 9 (1 h) [getaucht] | 86 | 82 |
| Nr. 9 (24 h) [getaucht] | 95 | 91 |
| Nr. 10 (1 h) [getaucht] | 81 | 82 |
| Nr. 10 (24 h) [getaucht] | 94 | 98 |

### Beispiel E

### Stabilität von fluoralkylsilanbasierenden Zusammensetzungen

### Nr. 11:

5,0 g DYNASYLAN^{®} F 8261 (3,3,4,4,5,5,6,6,7,7,8,8,8-Tridecafluoroctyltriethoxysilan), 1,0 g Salzsäure (37 % HCI / 63 % H₂O), 493,5 g Ethanol und 0,5 g SnCl₂x2H₂O werden bei Raumtemperatur in einer Glasflasche für mehrere Stunden gerührt. Die Zusammensetzung entspricht 1,0 Gew.-% DYNASYLAN^{®} F 8261, 0,126 Gew.-% H₂O, 0,074 Gew.-% HCI (absolut), 0,1 Gew.-% SnCl₂x2H₂O und 98,7 Gew.-% Ethanol.

Die Lösung wird für Langzeitversuche bei Raumtemperatur in einer verschlossenen Glasflasche aufbewahrt.

Die Fensterglasplatten werden jeweils nach Vorreinigung mit Isopropanol durch 20-minütiges Eintauchen in die Lösung behandelt. Nach Ablaufen der überschüssigen Lösung werden die Platten bei 150°C über 1 Stunde in einem Labortrockenschrank nachbehandelt. Die hydro-/oleophoben Eigenschaften werden jeweils durch Messung des statischen Randwinkels geprüft. Die Ergebnisse sind in Tabelle 5 zusammengestellt. Sie zeigen, dass die Zusammensetzung auch nach einer Lagerzeit von 6 Monaten in hervorragender Weise die gewünschten Eigenschaften entfaltet.

**Tabelle 5**

| Vergleichende Zusammensetzung der Untersuchungsergebnisse zur Stabilität der Zusammensetzung Nr. 11 | | |
|---|---|---|
| Alter der Zusammensetzung 11 in Monaten | Statischer Randwinkel [°] (nach Beschichtung) | Statischer Randwinkel [°] (nach 5 h in H₂O bei 100 °C) |
| 0* | 93 | 90 |
| 1 | 104 | 72 |
| 2 | 97 | 77 |
| 3 | 99 | 78 |
| 4 | 101 | 86 |
| 5 | 103 | 84 |
| 6 | 97 | 86 |

| | | |
|---|---|---|
| * nach 5 Stunden | | |

### Nr. 12:

5,0 g DYNASYLAN^{®} F 8261 (3,3,4,4,5,5,6,6,7,7,8,8,8-Tridecafluoroctyltriethoxysilan), 1,0 g Salzsäure (37 % HCl/ 63 % H₂O), 493,5 g Isopropanol und 0,5 g SnCl₂x2H₂O werden bei Raumtemperatur in einer Glasflasche für mehrere Stunden gerührt. Die Zusammensetzung entspricht 1,0 Gew.-% DYNASYLAN^{®} F 8261, 0,126 Gew.-% H₂O, 0,074 Gew.-% HCI (absolut), 0,1 Gew.-% SnCl₂x2H₂O und 98,7 Gew.-% Isopropanol.

Die Lösung wird für Langzeitversuche bei Raumtemperatur in einer verschlossenen Glasflasche aufbewahrt.

Die Fensterglasplatten werden jeweils durch 2-minütiges Einpolieren mit einem Papiertuch beschichtet. Es erfolgt keine weitere thermische Nachbehandlung. Die hydro-/oleophoben Eigenschaften werden jeweils durch Messung des statischen Randwinkels geprüft. Die Ergebnisse sind in Tabelle 6 zusammengestellt. Sie zeigen, dass die Zusammensetzung auch nach einer Lagerzeit von 5 Monaten in hervorragender Weise die gewünschten Eigenschaften entfaltet.

**Tabelle 6**

| Vergleichende Zusammenstellung der Untersuchungsergebnisse zur Stabilität der Zusammensetzung Nr. 12 | | |
|---|---|---|
| Alter der Zusammensetzung 12 in Monaten | Statischer Randwinkel [°] (nach Beschichtung) | Statischer Randwinkel [°] (nach 5 h in H₂O bei 100 °C) |
| 0* | 101 | 88 |
| 1 | 100 | 86 |
| 2 | 102 | 71 |
| 3 | 98 | 90 |
| 4 | 101 | 88 |
| 5 | 97 | 96 |

| | | |
|---|---|---|
| * nach 3 Tagen | | |

## Patentansprüche

1. Zusammensetzung, die mindestens ein fluororganofunktionelles Silan, mindestens eine Mineralsäure, mindestens ein Metallsalz von Zinn(II) oder Titan(III) und gegebenenfalls mindestens ein Siloxan enthält, wobei das Metallsalz ein Chlorid ist.

2. Zusammensetzung nach Anspruch 1,
**gekennzeichnet durch**
einen Gehalt an Metallsalz von 0,01 bis 10 Gew.-%, bezogen auf die Zusammensetzung.

3. Zusammensetzung nach Anspruch 1 oder 2,
**gekennzeichnet durch**
einen Gehalt an Mineralsäure von 0,001 bis 5 Gew.-%, bezogen auf die Zusammensetzung.

4. Zusammensetzung nach mindestens einem der Ansprüche 1 bis 3,
**gekennzeichnet durch**
einen Gehalt an Löse- und/oder Dispergiermittel.

5. Zusammensetzung nach mindestens einem der Ansprüche 1 bis 4,
**gekennzeichnet durch**
einen Gehalt an fluororganofunktionellem Silan und/oder Siloxan von 0,01 bis 10 Gew.-%, bezogen auf die Zusammensetzung.

6. Verfahren zur Herstellung einer Zusammensetzung nach Anspruch 1 durch Mischen, gegebenenfalls partielle Hydrolyse und gegebenenfalls Kondensation mindestens eines fluororganofunktionellen Silans und gegebenenfalls weiterer organofunktioneller Silane in Gegenwart von Wasser, mindestens einer Mineralsäure und mindestens eines Metallsalzes von Zinn(II) oder Titan(III), wobei das Metallsalz ein Chlorid ist.

7. Verfahren nach Anspruch 6,
**dadurch gekennzeichnet,**
**dass** man mindestens ein fluororganofunktionelles Silan der allgemeinen Formel I
F₃C(CF₂)ₘ(CH₂)ₙSiR¹_{y}X_{(3-y)} (I),
worin X ein Chlor oder eine RO-Gruppe bedeutet und R einen linearen oder verzweigten Alkylrest mit 1 bis 4 C-Atomen darstellt, R¹ eine lineare, verzweigte oder cyclische Alkylgruppe mit 1 bis 8 C-Atomen bedeutet, y = 0 oder 1 oder 2 und n = 0 oder 2 sind und m einen Wert von 0 bis 18 annehmen kann,
einsetzt.

8. Verfahren nach Anspruch 6 oder 7,
**dadurch gekennzeichnet,**
**dass** man das Metallsalz in fester oder flüssiger oder gelöster Form einsetzt.

9. Verfahren nach mindestens einem der Ansprüche 6 bis 8,
**dadurch gekennzeichnet,**
**dass** man als Metallsalz Zinn(II)chlorid oder Titan(III)chlorid einsetzt.

10. Verfahren nach mindestens einem der Ansprüche 6 bis 9,
**dadurch gekennzeichnet,**
**dass** man als Mineralsäure Chlorwasserstoff einsetzt.

11. Verfahren nach mindestens einem der Ansprüche 6 bis 10,
**dadurch gekennzeichnet,**
**dass** man das Metallsalz in einer Menge von 0,01 bis 10 Gew.-%, bezogen auf die Zusammensetzung, einsetzt.

12. Verfahren nach mindestens einem der Ansprüche 6 bis 11,
**dadurch gekennzeichnet,**
**dass** man die Mineralsäure in einer Menge von 0,01 bis 10 Gew.-%, bezogen auf die Zusammensetzung, einsetzt.

13. Verfahren nach mindestens einem der Ansprüche 6 bis 12,
**dadurch gekennzeichnet,**
**dass** man die Mineralsäure in konzentrierter oder wässriger Form einsetzt.

14. Verfahren nach mindestens einem der Ansprüche 6 bis 13,
**dadurch gekennzeichnet,**
**dass** man Wasser in einer Menge von 1 Gew.-ppm bis 2 Gew.-%, bezogen auf die Zusammensetzung, einsetzt.

15. Verfahren nach mindestens einem der Ansprüche 6 bis 14,
**dadurch gekennzeichnet,**
**dass** man die Silankomponente vorlegt und die Komponenten Metallsalz, Mineralsäure und gegebenenfalls Wasser gleichzeitig oder zeitlich versetzt zugibt.

16. Verfahren nach mindestens einem der Ansprüche 6 bis 15,
**dadurch gekennzeichnet,**
**dass** man das Mischen, die Hydrolyse bzw. Kondensation der Silankomponente in einem Löse- oder Dispergiermittel oder einem Löse- bzw. Dispergiermittelgemisch durchführt.

17. Verwendung einer Zusammensetzung nach den Ansprüchen 1 bis 16 für die Beschichtung von Oberflächen.

18. Verwendung nach Anspruch 17 für die Beschichtung von Holz, Naturfasern, Metallen, Metalloxiden, Füllstoffen, Pigmenten, Glas, Keramik, Emaille, Kunststoffen, Stein, Kunststein, Marmor, Beton oder Bitumen.

19. Oberflächenmodifiziertes Substrat, erhältlich durch Beschichten des Substrats mit einer Zusammensetzung nach den Ansprüchen 1 bis 18.

20. Oberflächenmodifiziertes Substrat nach Anspruch 19, wobei die Beschichtung 0,1 nm bis 1 000 µm dick ist.

## Claims

1. Composition comprising at least one organofluorine-functional silane, at least one mineral acid, at least one metal salt of tin(II) or titanium(III) and, if desired, at least one siloxane, wherein the metal salt is a chloride.

2. Composition according to Claim 1, **characterized by** a metal salt content of from 0.01 to 10% by weight, based on the composition.

3. Composition according to Claim 1 or 2, **characterized by** a mineral acid content of from 0.001 to 5% by weight, based on the composition.

4. Composition according to at least one of Claims 1 to 3, **characterized by** a solvent and/or dispersant content.

5. Composition according to at least one of Claims 1 to 4, **characterized by** an organofluorine-functional silane and/or siloxane content of from 0.01 to 10% by weight based on the composition.

6. Process for preparing a composition according to Claim 1 by mixing, if desired partially hydrolyzing, and, if desired, condensing at least one organofluorine-functional silane and, if desired, further organofunctional silanes in the presence of water, at least one mineral acid and at least one metal salt of tin (II) or titanium (III), wherein the metal salt is a chloride.

7. Process according to Claim 6, **characterized in that** at least one organofluorine-functional silane of the general formula I
F₃C(CF₂)ₘ(CH₂)ₙSiR¹_{y}X_{(3-y)} (I)
in which X is chloro or a group RO and R is a linear or branched alkyl radical of 1 to 4 carbon atoms, R¹ is a linear, branched or cyclic alkyl group of 1 to 8 carbon atoms, y = 0 or 1 or 2 and n = 0 or 2, and m can adopt a value from 0 to 18
is employed.

8. Process according to Claim 6 or 7, **characterized in that** the metal salt is employed in solid or liquid or dissolved form.

9. Process according to at least one of Claims 6 to 8, **characterized in that** tin(II) chloride or titanium (III) chloride is employed as metal salt.

10. Process according to at least one of Claims 6 to 9, **characterized in that** hydrogen chloride is employed as mineral acid.

11. Process according to at least one of Claims 6 to 10, **characterized in that** the metal salt is employed in an amount of from 0.01 to 10% by weight, based on the composition.

12. Process according to at least one of Claims 6 to 11, **characterized in that** the mineral acid is employed in an amount of from 0.01 to 10% by weight, based on the composition.

13. Process according to at least one of Claims 6 to 12, **characterized in that** the mineral acid is employed in concentrated or aqueous form.

14. Process according to at least one of Claims 6 to 13, **characterized in that** water is employed in an amount of from 1 ppm by weight to 2% by weight, based on the composition.

15. Process according to at least one of Claims 6 to 14, **characterized in that** the silane component is introduced initially and the metal salt, mineral acid and, if desired, water components are added simultaneously or consecutively.

16. Process according to at least one of Claims 6 to 15, **characterized in that** the mixing, hydrolysis and/or condensation of the silane component takes place in a solvent or dispersant or in a solvent or dispersant mixture.

17. Use of a composition according to Claims 1 to 16 for the coating of surfaces.

18. Use according to Claim 17 for the coating of wood, natural fibers, metals, metal oxides, fillers, pigments, glass, ceramic, enamel, plastics, natural stone, synthetic stone, marble, concrete or bitumen.

19. Surface-modified substrate obtainable by coating said substrate with a composition according to Claims 1 to 18.

20. Surface-modified substrate according to Claim 19, where the coating is 0.1 nm to 1000 µm thick.

## Revendications

1. Composition qui contient au moins un silane fluoroorgano-fonctionnel, au moins un acide minéral, au moins un sel métallique d'étain (II) ou de titane (III), et éventuellement au moins un siloxane, le sel métallique étant un chlorure.

2. Composition selon la revendication 1, **caractérisée par** une teneur en sel métallique de 0,01 à 10 % en poids par rapport à la composition.

3. Composition selon la revendication 1 ou 2, **caractérisée par** une teneur en acide minéral de 0,001 à 5 % en poids par rapport à la composition.

4. Composition selon au moins l'une des revendications 1 à 3, **caractérisée en ce qu'**elle contient un solvant et/ou un dispersant.

5. Composition selon au moins l'une des revendications 1 à 4, **caractérisée par** une teneur en silane fluoroorgano-fonctionnel et/ou siloxane de 0,01 à 10 % en poids par rapport à la composition.

6. Procédé de préparation d'une composition selon la revendication 1, par mélange, éventuellement hydrolyse partielle et éventuellement condensation d'au moins un silane fluoroorgano-fonctionnel et éventuellement d'autres silanes organo-fonctionnels en présence d'eau, d'au moins un acide minéral et d'au moins un sel métallique d'étain (II) ou de titane (III), le sel métallique étant un chlorure.

7. Procédé selon la revendication 6, **caractérisé en ce qu'**on utilise au moins un silane fluoroorgano-fonctionnel de formule générale I
F₃C(CF₂)ₘ(CH₂)ₙSiR¹_{y}X_{(3-y)} (I)
dans laquelle X est un atome de chlorure ou un groupe RO, et R représente un radical alkyle à chaîne droite ou ramifiée ayant 1 à 4 atomes de carbone, R¹ est un groupe alkyle à chaîne droite ou ramifiée, ou cyclique, ayant 1 à 8 atomes de carbone, y = 0 ou 1 ou 2, et n = 0 ou 2, et m peut prendre une valeur de 0 à 18.

8. Procédé selon la revendication 6 ou 7, **caractérisé en ce qu'**on utilise le sel métallique sous forme solide ou liquide ou dissoute.

9. Procédé selon au moins l'une des revendications 6 à 8, **caractérisé en ce qu'**on utilise en tant que sel métallique le chlorure d'étain (II) ou le chlorure de titane (III).

10. Procédé selon au moins l'une des revendications 6 à 9, **caractérisé en ce qu'**on utilise en tant qu'acide minéral l'acide chlorhydrique.

11. Procédé selon au moins l'une des revendications 6 à 10, **caractérisé en ce qu'**on utilise le sel métallique en une quantité de 0,01 à 10 % en poids par rapport à la composition.

12. Procédé selon au moins l'une des revendications 6 à 11, **caractérisé en ce qu'**on utilise l'acide minéral en une quantité de 0,01 à 10 % en poids par rapport à la composition.

13. Procédé selon au moins l'une des revendications 6 à 12, **caractérisé en ce qu'**on utilise l'acide minéral sous forme concentrée ou aqueuse.

14. Procédé selon au moins l'une des revendications 6 à 13, **caractérisé en ce qu'**on utilise l'eau en une quantité de 1 ppm en poids à 2 % en poids par rapport à la composition.

15. Procédé selon au moins l'une des revendications 6 à 14, **caractérisé en ce qu'**on met en place le composant silane, et on ajoute les composants sel métallique, acide minéral et éventuellement eau, simultanément ou avec un décalage dans le temps.

16. Procédé selon au moins l'une des revendications 6 à 15, **caractérisé en ce qu'**on met en oeuvre le mélange, l'hydrolyse ou la condensation du composant acide dans un solvant ou un dispersant ou dans un mélange de solvants ou de dispersants.

17. Utilisation d'une composition selon les revendications 1 à 16 pour revêtir des surfaces.

18. Utilisation selon la revendication 17 pour revêtir du bois, des fibres naturelles, des métaux, des oxydes métalliques, des matières de charge, des pigments, du verre, de la céramique, de l'émail, des matières plastiques, de la pierre, de la pierre artificielle, du marbre, du béton ou du bitume.

19. Substrat modifié en surface, pouvant être obtenu par revêtement du substrat par une composition selon les revendications 1 à 18.

20. Substrat modifié en surface selon la revendication 19, dans lequel le revêtement a une épaisseur de 0,1 nm à 1000 µm.
